# EUROPEAN PATENT APPLICATION

(11) **EP 4 691 596 A1**
(43) Date of publication of application: **11.02.2026**
(21) Application number: 23930601.2
(22) Date of filing: 30.03.2023
(51) Int. Cl.: B01D 53/04, B01D 53/40, B01J 20/28

(54) **REACTOR AND GAS RECOVERY DEVICE**

(71) Applicant: NGK Insulators, Ltd., Nagoya-shi, Aichi 467-8530 (JP)
(72) Inventor: WADA,Takuya, Nagoya-shi, Aichi 467-8530 (JP); MURAKAMI,Keiya, Nagoya-shi, Aichi 467-8530 (JP); OHASHI,Tatsuya, Nagoya-shi, Aichi 467-8530 (JP)
(74) Representative: MERH-IP Matias Erny Reichl Hoffmann Patentanwälte PartG mbB
(86) International application number: PCT/JP2023/013435
(87) International publication number: WO 2024/201965

(57) **Abstract**

A reactor including a plurality of honeycomb structures 10 each having an outer peripheral wall 11 and partition walls 15 provided on an inner side of the outer peripheral wall 11, the partition walls defining a plurality of cells 14 through which a process gas containing a capturing target gas can flow, each of the cells 14 extending from an inflow end face to an outflow end face of each honeycomb structure 10. The honeycomb structures 10 are provided so that the outflow end faces 13 and the inflow end faces 12 of adjacent honeycomb structures 10 face each other and central axes of the cells of the adjacent honeycomb structures 10a, 10b are aligned with each other. The partition walls 15 have at least one protrusion 16 protruding into the cells 14 and extending from the inflow end face 12 to the outflow end face 13. The protrusions 16 on the partition walls 15 of the adjacent honeycomb structures 10a, 10b are provided at different positions.

## Description

### FIELD OF THE INVENTION

This invention relates to a reactor and a gas recovery device.

### BACKGROUND OF THE INVENTION

As a measure against global warming, there is a growing demand for the effective use of CO₂, including the recovery of CO₂ from factory exhaust gases, and combustion exhaust gases of CO₂ emission sources such as thermal power plants, and direct CO₂ recovery (direct air capture: DAC) and fixation from the atmosphere, as well as methanation of recovered CO₂.

The proposed main method for recovering CO₂ is to adsorb CO₂ onto an adsorbent capable of adsorbing CO₂, desorb the CO₂ by changing a temperature, pressure, humidity, and the like, recover it as highly concentrated CO₂, and use it as a raw material for the chemical industry, or to inject it into the underground and fix it. The adsorbent is supported on porous pellets, porous particles, fiber filters, and honeycomb structures and used (e.g., Non-Patent Literature 1).

### PRIOR ART

### Non-Patent Literature

[Non-Patent Literature 1] "Cost and Evaluation of Direct Air Capture (DAC) Method for Carbon Dioxide (Vol. 2) - Adsorption Separation Process -", Center for Low Carbon Society Strategy, Japan Science and Technology Agency, March 2021.

### SUMMARY OF THE INVENTION

### Problem to be Solved by the Invention

Non-Patent Literature 1 describes a reactor in which an adsorbent is supported (an adsorbent layer is formed) on each surface of partition walls of a honeycomb structure made of a mullite material, with a thickness of partition walls of 0.15 mm, a cell density of 400 cells/inch² (62 cells/cm²) and an opening ratio of 75.0%.

However, simply supporting the adsorbent on the surfaces of the partition walls of the honeycomb structure may not be sufficient to improve an amount of CO₂ recovered. This would be because when a gas containing CO₂ is passed through the honeycomb structure, the gas flow is not easily disturbed and the gas containing CO₂ does not come into sufficient contact with the adsorbent supported on the partition walls.

Although the case of the reactor in which the capturing target gas is CO₂ and the adsorbent capable of adsorbing CO₂ is used is described as an example, the same problem as described above may occur for a reactor in which the capturing target gas is a gas other than CO₂ and a functional material other than the adsorbent capable of adsorbing CO₂ is used.

This invention was made to solve the above problems, and an object of this invention is to provide a reactor and a gas recovery device that can increase an amount of a capturing target gas recovered.

### Means for Solving the Problem

As a result of extensive studies for reactors including a plurality of honeycomb structures, the inventors have found that the above problems can be solved by disposing a plurality of honeycomb structures so that outflow end faces and inflow end faces of adjacent honeycomb structures face each other and central axes of the cells of adjacent honeycomb structures are aligned with each other, and by providing protrusions at predetermined positions on the partition walls that define each cell, and they have completed this invention. In other words, this invention is exemplified as follows:
<1> A reactor comprising a plurality of honeycomb structures each having an outer peripheral wall and partition walls provided on an inner side of the outer peripheral wall, the partition walls defining a plurality of cells through which a process gas containing a capturing target gas can flow, each of the cells extending from an inflow end face to an outflow end face of each honeycomb structure,
   wherein the honeycomb structures are provided so that the outflow end faces and the inflow end faces of adjacent honeycomb structures face each other and central axes of the cells of the adjacent honeycomb structures are aligned with each other,
   wherein the partition walls comprise at least one protrusion protruding into the cells and extending from the inflow end face to the outflow end face, and
   wherein the protrusions on the partition walls of the adjacent honeycomb structures are provided at different positions.
<2> The reactor according to <1>, wherein the outflow end face and the inflow end face of the adjacent honeycomb structures are in contact with each other.
<3> The reactor according to <1> or <2>, wherein the honeycomb structures are further provided so that the outer peripheral walls parallel to an extending direction of the cells face each other.
<4> The reactor according to <3>, wherein the outer peripheral walls parallel to the extending direction of the cells are in contact with each other.
<5> The reactor according to any one of <1> to <4>, wherein the protrusion is provided on the partition walls that defines the cells other than the cells located at the outermost periphery in a cross section of each of the honeycomb structures orthogonal to the extending direction of the cells.
<6> The reactor according to any one of <1> to <5>, wherein each of the honeycomb structures has a rectangular pillar shape.
<7> The reactor according to any one of <1> to <6>, wherein each of the cells has a quadrangular or hexagonal shape in a cross section of each of the honeycomb structures orthogonal to the extending direction of the cells.
<8> The reactor according to any one of <1> to <7>, wherein the partition wall that defines one of the cells has a structure in which sides having the protrusion and sides having no protrusion are alternately continuous, in a cross section of each of the honeycomb structures orthogonal to the extending direction of the cells.
<9> The reactor according to any one of <1> to <8>, wherein a width of the protrusion is 20 to 80% of a length of one side provided with the protrusion, in a cross section of each of the honeycomb structures orthogonal to the extending direction of the cells.
<10> The reactor according to any one of <1> to <9>, wherein a height of the protrusion is 10 to 40% of a length of one side provided with the protrusion, in a cross section of each of the honeycomb structures orthogonal to the extending direction of the cells.
<11> The reactor according to any one of <1> to <10>, wherein one of the honeycomb structures has a length of 10 to 200 mm in the extending direction of the cells.
<12> The reactor according to any one of <1> to <11>, wherein the honeycomb structures comprise at least one selected from cordierite, mullite, alumina, silicon carbide, and Si-bonded silicon carbide as a main component.
<13> The reactor according to any one of <1> to <12>, wherein the partition walls have a thickness of 0.05 mm to 5 mm.
<14> The reactor according to any one of <1> to <13>, wherein the partition walls have a porosity of 30% or more and less than 80%.
<15> The reactor according to any one of <1> to <14>, wherein the partition walls have an average pore diameter of 10 µm to 300 µm.
<16> The reactor according to any one of <1> to <15>, further comprising a functional material supported on the partition walls.
<17> The reactor according to <16>, wherein the functional material is an amine compound and/or a metal organic framework.
<18> The reactor according to any one of <1> to <17>, further comprising a cylindrical member that houses the honeycomb structures.
<19> A gas recovery device for adsorbing and releasing a capturing target gas contained in a process gas, the gas recovery device comprising:
   the reactor according to any one of <1> to <18>;
   a heater configured to heat the reactor;
   a gas feed pipe configured to feed the process gas or a purge gas to an inflow port of the reactor; and
   a gas discharge pipe configured to discharge the process gas or the purge gas from an outflow port of the reactor.
<20> The gas recovery device according to <19>,
   wherein the gas feed pipe has a gas feed branch pipe that branches into two portions, the gas feed branch pipe being a first gas feed branch pipe configured to feed the process gas and a second gas feed branch pipe configured to feed the purge gas,
   wherein the gas discharge pipe has a gas discharge branch pipe that branches into two portions, the gas discharge branch pipe being a first gas discharge branch pipe configured to discharge the process gas and a second gas discharge branch pipe configured to discharge the purge gas, and
   wherein the gas recovery device further comprises: a feed gas switching valve configured to shut off the first gas feed branch pipe or the second gas feed branch pipe; and a discharge gas switching valve configured to shut off the first gas discharge branch pipe or the second gas discharge branch pipe.

### Effects of Invention

According to this invention, it is to provide a reactor and a gas recovery device that can increase an amount of a capturing target gas recovered.

### BRIEF DESCRIPTION OF THE DRAWINGS

FIG. 1A is a schematic view of a cross section of honeycomb structures making up a reactor according to an embodiment of this invention, which is parallel to an extending direction of the cells;
FIG. 1B is a schematic view of the cross sectional of the honeycomb structure taken along the line a-a' in FIG. 1A;
FIG. 1C is a schematic cross-sectional view of the honeycomb structure taken along the line b-b' in FIG. 1A;
FIG. 2 is an enlarged schematic view of one cell in a cross section of a honeycomb structure orthogonal to an extending direction of cells;
FIG. 3 is a schematic view of a cross section of honeycomb structures making up a reactor according to another embodiment of this invention, which is parallel to an extending direction of the cells;
FIG.4A is a schematic view of a cross section of honeycomb structures making up a reactor according to an embodiment of this invention, which is parallel to an extending direction of the cells;
FIG. 4B is a schematic cross-sectional view of the honeycomb structure taken along the line c-c' in FIG. 4A;
FIG. 4C is a schematic cross-sectional view of the honeycomb structure taken along the line d-d' in FIG. 4A;
FIG. 5 is a schematic view of a cross section of a cylindrical member and honeycomb structures that make up a reactor according to another embodiment of this invention, which is parallel to an extending direction of the cells; and
FIG. 6 is a schematic view of a structure of a gas recovery device according to an embodiment of the invention.

### DETAILED DESCRIPTION OF THE INVENTION

A reactor according to this invention includes a plurality of honeycomb structures each having an outer peripheral wall and partition walls provided on an inner side of the outer peripheral wall, the partition walls defining a plurality of cells through which a process gas containing a capturing target gas can flow, each of the cells extending from an inflow end face to an outflow end face of each honeycomb structure, wherein the honeycomb structures are provided so that the outflow end faces and the inflow end faces of adjacent honeycomb structures face each other and central axes of the cells of the adjacent honeycomb structures are aligned with each other, wherein the partition walls comprise at least one protrusion protruding into the cells and extending from the inflow end face to the outflow end face, and wherein the protrusions on the partition walls of the adjacent honeycomb structures are provided at different positions. With such a configuration, the reactor according to this invention is prone to turbulence in the flow of the process gas passing through the cells of the honeycomb structures. As a result, when a functional material is supported on the honeycomb structures, a contact efficiency of the processing gas with the functional material is improved, and an amount of the capturing target gas recovered can be increased.

A gas recovery device according to this invention is for adsorbing and releasing a capturing target gas contained in a process gas, and includes: the above reactor; a heater configured to heat the reactor; a gas feed pipe configured to feed the process gas or a purge gas to an inflow port of the reactor; and a gas discharge pipe configured to discharge the process gas or the purge gas from an outflow port of the reactor. With such a configuration, the gas recovery device according to this invention uses the reactor that can increase the amount of the target gas recovered, and therefore can improve the gas recovery performance.

Hereinafter, embodiments of the invention will be specifically described with reference to the drawings. It should be understood that the invention is not limited to the following embodiments, and those which have appropriately added changes, improvements and the like to the following embodiments based on knowledge of a person skilled in the art without departing from the spirit of the invention fall within the scope of the invention.

### <Reactor>

The reactor according to an embodiment of the invention can be suitably used to recover the capturing target gas contained in the process gas. Non-limiting examples of the process gas include exhaust gases emitted from factories, power plants, and the like, and the atmosphere. Non-limiting examples of the exhaust gas include combustion exhaust gases generated when burning fossil fuels, coal gasification gases made by gasifying coal or natural gases in thermal power plants, steel mills, and other facilities. Non-limiting examples of the capturing target gas include carbon dioxide (CO₂), nitrogen oxides (NOₓ), sulfur oxides (SOₓ), hydrogen sulfide (H₂S) and the like. Among these, the reactor according to an embodiment of the invention is particularly useful for recovering carbon dioxide (CO₂) from combustion exhaust gases and the atmosphere.

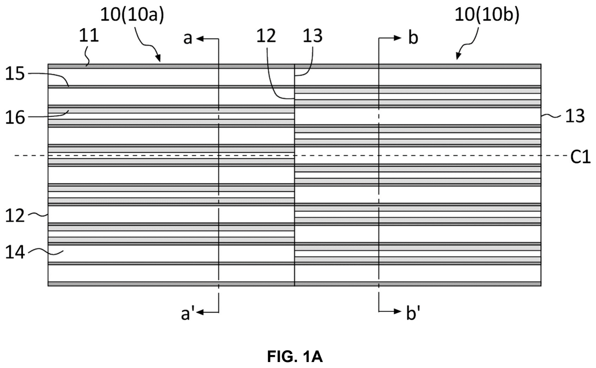

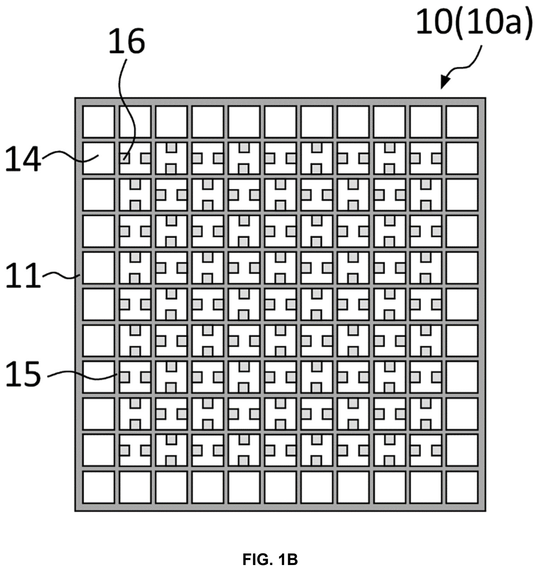

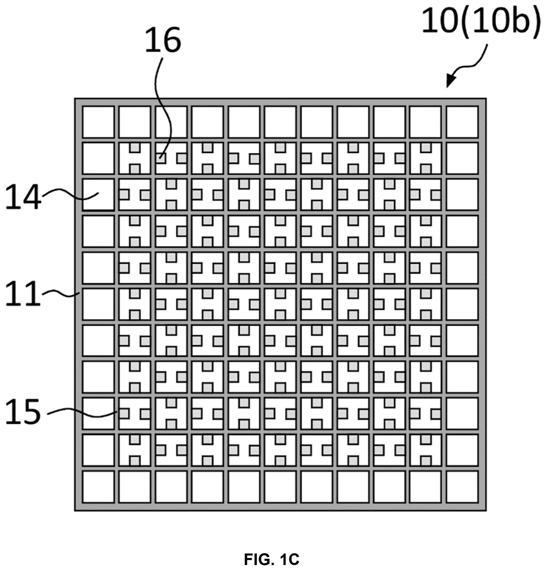

FIG. 1A is a schematic view of a cross section of honeycomb structures making up a reactor according to an embodiment of this invention, which is parallel to an extending direction of the cells. FIG. 1B is a schematic view of the cross sectional of the honeycomb structure taken along the line a-a' in FIG. 1A. FIG. 1C is a schematic cross-sectional view of the honeycomb structure taken along the line b-b' in FIG. 1A.

The reactor illustrated in FIGS. 1A to 1C has two honeycomb structures 10 (10a, 10b).

Each of the two honeycomb structures 10 (10a, 10b) has an outer peripheral wall 11 and partition walls 15 provided on an inner side of the outer peripheral wall 11, the partition walls 15 defining a plurality of cells 14, each of the cells 14 extending from an inflow end face 12 to an outflow end face 13 of each honeycomb structure. The cells 14 can allow a process gas containing a capturing target gas to flow therethrough.

The outflow end face 13 of the honeycomb structure 10a and the inflow end face 12 of the adjacent honeycomb structure 10b are disposed so as to face each other. Central axes C1 of the cells 14 of the adjacent honeycomb structures 10a, 10b are aligned with each other.

The partition walls 15 have at least one protrusion 16 protruding into the cells 14 and extending from the inflow end face 12 to the outflow end face 13. The positions of the protrusions 16 provided on the partition walls 15 of the adjacent honeycomb structures 10a, 10b are different from each other.

In the reactor having the above structure, the flow of the process gas flowing in from the inflow end face 12 of the honeycomb structure 10a is disturbed by the protrusion 16 provided at the cells 14. The process gas that flows out of the outflow end face 13 of the honeycomb structure 10a flows in from the inflow end face 12 of the honeycomb structure 10b. The flow of the process gas is disturbed because the protrusions 16 provided on the partition walls 15 of the adjacent honeycomb structures 10a, 10b are placed at different positions. Also, the flow of the process gas flowing from the inflow end face 12 of the honeycomb structure 10b is disturbed by the protrusion 16 provided at the cells 14. As a result, in the reactor having the above structure, the turbulence of the processing gas is easily generated, and so when a functional material is supported on the honeycomb structures 10a, 10b, a contact efficiency of the processing gas with the functional material is improved, and an amount of the capturing target gas recovered can be increased.

In the reactor illustrated in FIGS. 1A to 1C, the embodiment having two honeycomb structures 10 is shown as an example, but the number of honeycomb structures 10 is not particularly limited as long as there are a plurality of honeycomb structures 10 (two or more). For example, when the reactor has three honeycomb structures 10, they may be arranged in series in the order of the honeycomb structure 10a, the honeycomb structure 10b, and the honeycomb structure 10a in the flow direction of the process gas. The upper limit of the number of the honeycomb structures 10 arranged in series in the flow direction of the processing gas is not particularly limited, and may be appropriately adjusted depending on the processing amount of the processing gas, and the like.

In the reactor illustrated in FIGS. 1A to 1C, the outflow end face 13 of the honeycomb structure 10a and the inflow end face 12 of the adjacent honeycomb structure 10b are in contact with each other. By adopting such a configuration, the reactor can be made compact.

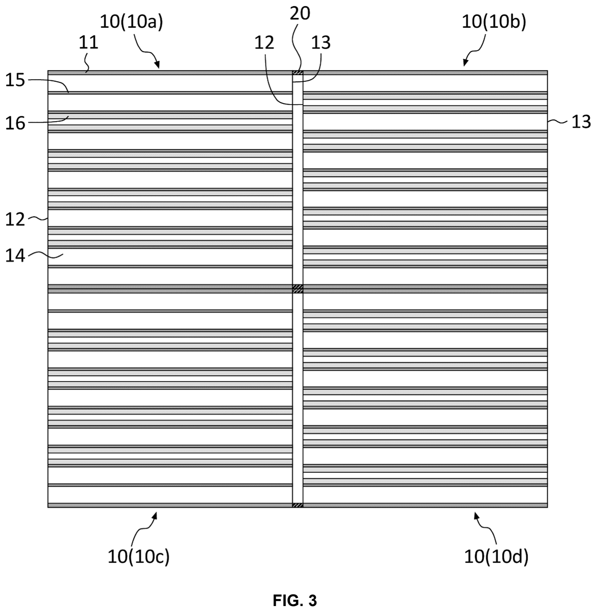

However, the outflow end face 13 of the honeycomb structure 10a and the inflow end face 12 of the adjacent honeycomb structure 10b may not be in contact with each other. For example, a spacer 20 (see FIG. 3 described below) or the like may be disposed between the outflow end face 13 of the honeycomb structure 10a and the inflow end face 12 of the honeycomb structure 10b adjacent to each other to come into indirect contact with each other.

The position of the protrusion 16 provided on the partition walls 15 is not particularly limited and can be appropriately determined depending on the performance required for the reactor. Among these, as illustrated in FIGS. 1A to 1C, in a cross section (FIGS. 1B and 1C) of the honeycomb structures 10 orthogonal to the extending direction of the cells 14, it is preferable that the protrusion 16 is provided on the partition walls 15 that define the cells 14 other than the cells 14 located at the outermost periphery. By providing the protrusion 16 at such a position, the effect of disturbing the flow of the process gas can be maximized, and the protrusion 16 can be stably formed on the partition walls 15.

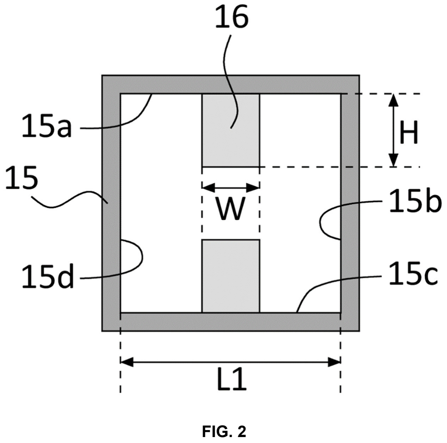

Here, FIG.2 illustrates an enlarged schematic view of one cell in a cross section of the honeycomb structure orthogonal to the extending direction of cells 14.

As illustrated in FIG. 2, the partition wall 15 that defines one cell 14 preferably has a structure in which sides 15a, 15c having the protrusion 16 and sides 15b, 15d having no protrusion 16 are alternately and continuously arranged. By adopting such a structure, the effect of disturbing the flow of the processing gas can be maximized.

A width W of the protrusion 16 is not particularly limited, but in the cross section of the honeycomb structure 10 orthogonal to the extending direction of the cells 14, it is preferably 20 to 80% of a length L1 of the sides 15a, 15c provided with the protrusion 16, more preferably 25 to 75%, and even more preferably 30 to 70%. By providing the protrusion 16 having such a width W, it is possible to suppress the pressure loss when the process gas flows through the cells 14, while maximizing the effect of disturbing the flow of the process gas.

A height H of the protrusion 16 is not particularly limited, but in the cross section of the honeycomb structure 10 orthogonal to the extending direction of the cells 14, it is preferably 10 to 40% of a length L1 of the sides 15a, 15c provided with the protrusion 16, more preferably 15 to 35%, and even more preferably 20 to 30%. By providing the protrusion 16 having such a height H, it is possible to suppress the pressure loss when the process gas flows through the cells 14, while maximizing the effect of disturbing the flow of the process gas.

In the reactor, the honeycomb structures 10 may be further provided so that the outer peripheral walls 11 parallel to the extending direction of the cells 14 face each other.

Here, FIG. 3 illustrates a schematic view of the cross section of the honeycomb structures making up the reactor having the structure, which is parallel to the extending direction of the cells.

As illustrated in FIG. 3, the reactor has honeycomb structures 10a, 10b and honeycomb structures 10c, 10d arranged adjacent to each other in the extending direction of the cells 14 (the flow direction of the process gas). Moreover, the honeycomb structures 10a, 10b and the honeycomb structures 10c, 10d are arranged adjacent to each other in a direction orthogonal to the extending direction of the cells 14. By thus arranging the honeycomb structures 10a to 10d, when the honeycomb structures 10a to 10d support the functional material, it is possible to increase the amount of the capturing target gas recovered, which is contained in the process gas.

It is preferable that between honeycomb structures 10a and 10c, and between honeycomb structures 10b and 10d, which are arranged adjacent to each other in a direction orthogonal to the extending direction of cells 14, the outer walls 11 parallel to the extending direction of the cells 14 are in contact with each other. By adopting such a configuration, the reactor can be made compact.

However, spacers 20 may be arranged between honeycomb structures 10a and 10c and between honeycomb structures 10b and 10d, as with the spacers 20 arranged between honeycomb structures 10a and 10b and between honeycomb structures 10c and 10d. The shape and type of the spacer 20 are not particularly limited and may be appropriately adjusted depending on the placed positions, and the like.

Next, the details of the honeycomb structures 10, which make up the reactor, will be described.

The shape of the honeycomb structure is not particularly limited as long as the honeycomb structure has the above features. For example, the outer shape of the cross section orthogonal to the extending direction of the cells 14 of the honeycomb structure 10 can be a polygon such as a triangle, quadrangle, hexagon and octagon, and a round shape such as a circle, an ellipse, an oval, an egg shape, an elongated circular shape, and a rounded quadrangle (a quadrangle consisting of a curved line as a whole, in which each side and corner is curved, and a radius of curvature of each side is greater than that of each corner). Among these, the shape of the honeycomb structure 10 preferably has quadrangular outer shapes of the cross section and the end faces (inflow end face 12 and outflow end face 13) (i.e., the shape of the honeycomb structure 10 is a quadrangular pillar shape).

In one honeycomb structure 10, the length of one side of the inflow end face 12 and the outflow end face 13 is preferably 100 to 500 mm, and more preferably 200 to 400 mm. With the honeycomb structure 10 having such a size, a sufficient amount of the functional material supported on the cells 14 can be ensured, so that practicality as a reactor can be ensured.

The length of one honeycomb structure 10 in the extending direction of the cells 14 is preferably 10 to 200 mm, more preferably 15 to 190 mm, and even more preferably 20 to 180 mm. With the honeycomb structure 10 having such a length, a sufficient amount of the functional material supported on the cells 14 can be ensured, so that practicality as a reactor can be ensured.

The shape of each cell 14 is not particularly limited, but it may be polygon such as a triangle, quadrangle, hexagon, and octagon, and a round shape such as a circle, an ellipse, an oval, an egg shape, and an elongated circular shape, in the cross section of the honeycomb structure 10 orthogonal to the extending direction of the cells 14. The shape of each cell may be alone or in combination of two or more. Moreover, among these shapes of each cell, the quadrangle or the hexagon is preferable. By providing each cell having such a shape, it is possible to reduce the pressure loss when the process gas flows. It should be noted that the shape of each cell in the cross section is the same as that of each cell at the end faces.

The material of the honeycomb structure 10 (the outer peripheral wall 11 and the partition walls 15) is not particularly limited, but from the viewpoint of ensuring the strength of the honeycomb structure 10, they may contain one or more materials selected from cordierite, mullite, alumina, silica silicon carbide, and Si-bonded silicon carbide as main components. As used herein, the term "main component" means a component in which a proportion in the total component is more than 50% by mass.

The thickness of the partition walls 15 is not particularly limited, but from the viewpoints of ensuring the strength of the honeycomb structures 10 and reducing the pressure loss when the process gas passes through the cells 14, it may preferably be 0.05 mm to 5 mm, more preferably 0.10 mm to 4.5 mm, and even more preferably 0.15 mm to 4 mm.

Further, the "thickness of the partition walls 15" as used herein refers to a length of a line segment across the partition wall 15 when the centers of gravity of adjacent cells 14 are connected by the line segment in a cross section of the honeycomb structure 10 orthogonal to the extending direction of the cells 14. The thickness of the partition walls 15 refers to an average value of the thicknesses of all the partition walls 15.

The porosity of the partition walls 15 is not particularly limited, but from the viewpoints of ensuring the strength of the honeycomb structure 10 and reducing the pressure loss when the process gas passes through the cells 14, it may preferably be 30% or more and less than 80%, more preferably 35% to 75%, and even more preferably 40% to 70%.

It should be noted that the "porosity of the partition walls 15" as used herein means a porosity measured using the mercury intrusion technique in accordance with JIS R1655: 2003.

The average pore diameter of the partition walls 15 is not particularly limited, but from the viewpoints of ensuring the strength of the honeycomb structure 10 and reducing the pressure loss when the process gas passes through the cells 14, it may preferably be 10 µm to 300 µm, more preferably 15 µm to 280 µm, and even more preferably 20 µm to 260 µm.

The "average pore diameter of the partition walls 15" as used herein means the pore diameter of the partition walls 15 at 50% of an integrated value in a pore distribution determined by the mercury intrusion method in accordance with JIS R1655: 2003.

The thickness of the outer peripheral wall 11 is not particularly limited, but from the viewpoints of ensuring the strength of the honeycomb structure 10 and the like, it may preferably be 0.05 mm to 10 mm, more preferably 0.20 mm to 8 mm, and even more preferably 0.30 mm to 6 mm.

As used herein, the thickness of the outer peripheral wall 11 refers to a length, in a normal line direction of a side surface of the honeycomb structure 10, from a boundary between the outer peripheral wall 11 and the outermost cell 14 or partition wall 15 to the outer peripheral surface of the honeycomb structure 10 in the cross section of the honeycomb structure 10 orthogonal to the extending direction of the cells 14.

The cell density of the honeycomb structure is not particularly limited, but from the viewpoint of ensuring the strength of the honeycomb structure 10 and increasing the amount of the functional material supported, it may preferably be 0.05 cells/cm² to 25 cells/cm², more preferably from 0.1 cells/cm² to 20 cells/cm², and even more preferably 0.5 cells/cm² to 15 cells/cm².

As used herein, the "cell density" refers a value obtained by dividing a number of cells by an area of one end face (the total area of the partition walls 15 and the cells 14, excluding the outer peripheral wall 11) of the honeycomb structure 10.

The reactor can further include a functional material supported on the partition walls 15 of the honeycomb structures 10. The functional material can also be supported on the outer peripheral wall 11 facing the cells 14. By supporting the functional material, it is possible to recover (adsorb) and release (desorb) the capturing target gas from the process gas.

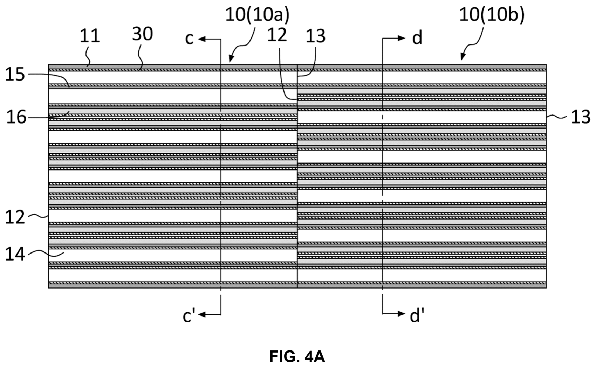

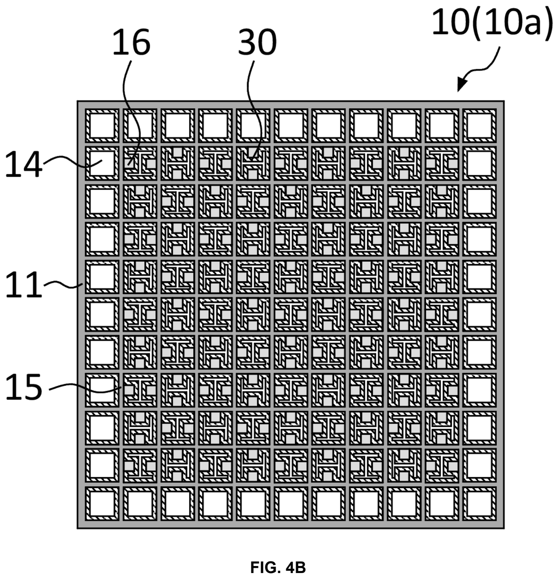

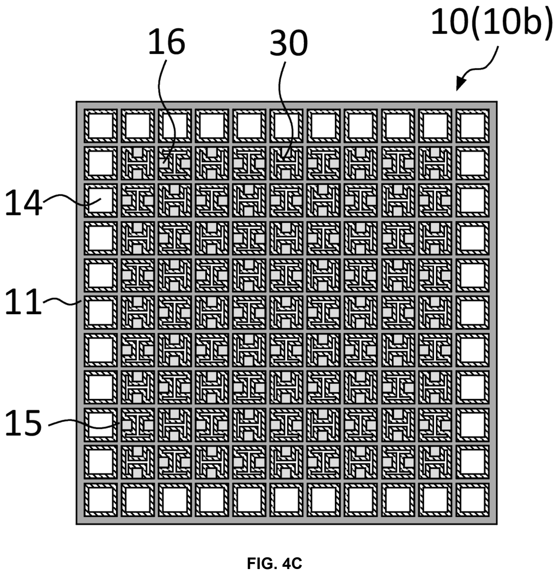

Here, FIG. 4A is a schematic view of a cross section of honeycomb structures that supports the functional material, which is parallel to the extending direction of the cells. Also, FIG. 4B is a schematic view of a cross section of the honeycomb structure in FIG. 4A taken along the line c-c', and FIG. 4C is a schematic view of a cross section of the honeycomb structure in FIG. 4A taken along the line d-d'.

In the honeycomb structures 10 illustrated in FIGS. 4A to 4C, the functional material 30 is supported on the partition walls 15 (the portion where the protrusion 16 is formed are the protrusion 16) and the outer peripheral wall 11 facing the cells 14.

The method for supporting the functional material 30 is not particularly limited, but it is sufficient to form the layer containing the functional material 30 on the partition walls 15 and the outer peripheral wall 11 facing the cells 14 of the honeycomb structures 10.

The functional material 30 is not limited as long as it is capable of recovering the capturing target gas contained in the process gas, and for example, the adsorbent for the capturing target gas can be used. By using the adsorbent as the functional material 30, the capturing target gas can be adsorbed and recovered, and the recovered gas can be easily desorbed by changing conditions such as temperatures.

The adsorbent may be appropriately selected according to the type of the capturing target gas, and is not particularly limited. Examples of the adsorbent effective for adsorption of the capturing target gas such as carbon dioxide (CO₂) include amine compounds, organometallic complexes, nanoporous ceramics or mesoporous silica on which the amine compounds and/or the organometallic complexes are supported. These can be used alone or in combination of two or more.

Non-limiting examples of the amine compounds include monoethanolamine (MEA), N-methyldiethanolamine (MDEA) and the like.

Non-limiting examples of the organometallic complexes include porous metal organic frameworks (MOFs) that have a structure capable of adsorbing the capturing target gas in the pores.

Among the various adsorbents listed above, the amine compounds and/or the metal organic frameworks are preferred. These adsorbents can be used to stably improve the adsorption of the capturing target gas such as carbon dioxide (CO₂).

The thickness of the layer containing the functional material may be determined according to the size of the cells 14, and is not particularly limited. For example, from the viewpoint of ensuring sufficient contact with air, the thickness of the layer containing the functional material is preferably 20 µm or more, more preferably 25 µm or more, and even more preferably 30 µm or more. On the other hand, from the viewpoint of suppressing separation of the layer containing the functional material from the partition walls 15 and the outer peripheral wall 11, the thickness of the layer containing the functional material is preferably 400 µm or less, more preferably 380 µm or less, and even more preferably 350 µm or less.

With regard to the reactor, the honeycomb structures 10 themselves can be used as a reactor, but it can also be further provided with a cylindrical member that houses the honeycomb structures 10.

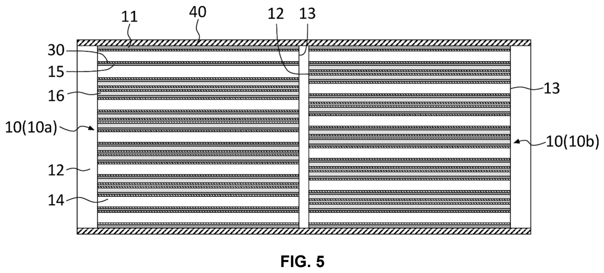

Here, FIG. 5 illustrates a schematic view of the cross section of the honeycomb structures housed in the cylindrical member, which is parallel to the extending direction of the cells.

As illustrated in FIG. 5, the reactor includes two honeycomb structures 10 (10a, 10b) and a cylindrical member 40 that houses the honeycomb structures 10. By housing the honeycomb structures 10 in the cylindrical member 40, the honeycomb structures 10 can be protected from external shocks.

In Figure 5, the two honeycomb structures 10 (10a, 10b) and the cylindrical member 40 are in direct contact with each other, but another member such as an insulating material may be placed between the honeycomb structure 10 and the cylindrical member 40.

The cylindrical member 40 is preferably made of a metal in terms of manufacturability, although not particularly limited thereto. Examples of the material of the cylindrical member 40 that can be used herein include stainless steel, titanium alloys, copper alloys, aluminum alloys, brass and the like. Among them, the stainless steel is preferable because it has high durability and reliability and is inexpensive.

### <Method for Producing Reactor>

The method for producing the reactor according to an embodiment of the invention is not particularly limited as long as it is a method capable of making the structure as described above.

For example, the method for producing the reactor according to an embodiment of this invention includes a step (step A) of producing the honeycomb structures 10 and a step (step B) of arranging the honeycomb structures 10 at predetermined positions.

In the step A, the method for producing the honeycomb structures 10 is not particularly limited, and it can be carried out in accordance with a known method in the art. For example, each of the honeycomb structures 10 can be produced as follows:
First, a green body containing ceramic powder is extruded into a desired shape to prepare a honeycomb formed body. At this time, the shape and density of each cell, and shapes and thicknesses of the outer peripheral wall 15 and the partition walls 11, as well as the shape of the protrusion provided on the partition walls, can be controlled by selecting dies and jigs in appropriate forms. As the ceramic powder, powder of the above-described ceramics or raw material powder that will become the above-described ceramics after firing (for example, cordierite-forming raw materials) can be used. The cordierite-forming raw materials are raw materials that will form cordierite by firing. The cordierite-forming raw materials may preferably have a chemical composition of 30 to 45% by mass of alumina (Al₂O₃) (including the proportion of aluminum hydroxide that is converted to alumina), 11 to 17% by mass of magnesia (MgO) and 42 to 57% by mass of silica (SiO₂). The green body can also contain a binder, a pore former, a dispersant, water, an organic solvent and the like. The porosity and average pore size of the partition walls 15 can be controlled by selecting the type and amount of the ceramic powder, binder, pore former and dispersant to be used, as needed.

The honeycomb formed body obtained above can be then dried and fired to obtain the honeycomb structure 10. Non-limiting examples of the drying method include known drying methods such as hot air drying, microwave drying, dielectric drying, drying under reduced pressure, drying in vacuum, and freeze drying. Among these, a drying method that combines the hot air drying with the microwave drying or dielectric drying is preferable because the entire honeycomb formed body can be rapidly and uniformly dried.

Subsequently, in the step B, the honeycomb structures 10 obtained above are placed at predetermined positions. Specifically, a plurality of honeycomb structures 10 are prepared and arranged so that the outflow end faces 13 and the inflow end faces 12 of adjacent honeycomb structures 10 face each other and the central axes C1 of the cells 14 of adjacent honeycomb structures 10 are aligned with each other. At this time, the spacer(s) is/are placed between adjacent honeycomb structures 10 if necessary.

In addition to the above steps, the method for producing the reactor according to an embodiment of this invention can further include a step of supporting the functional material 30 on the partition walls 15 of the honeycomb structures 10 and the like. This step may be performed at any stage after the step A. For example, this step may be performed between the step A and the step B or after the step B.

Although the method for supporting the functional material is not particularly limited, it can be formed, for example, by the following steps. The honeycomb structure 10 is immersed in a slurry containing the functional material, an organic binder, and a dispersion medium for a predetermined period of time, and an excess slurry on the end faces and the outer periphery of the honeycomb structure 10 is removed by blowing and wiping. The dispersion medium can be water, an organic solvent (e.g., toluene, xylene, ethanol, n-butanol, ethyl acetate, butyl acetate, terpineol, dihydroterpineol, texanol, ethylene glycol monobutyl ether acetate, diethylene glycol monoethyl ether acetate, diethylene glycol monoethyl ether, diethylene glycol monobutyl ether acetate, diethylene glycol monobutyl ether) or a mixture thereof. The slurry can be then dried to support the functional material on each surface of the partition walls 15 and the like. The drying may be performed while heating the honeycomb structure 10 to a temperature of about 120 to 600°C, for example. Although a series of steps of immersion, slurry removal, and drying may be performed only once, the steps can be repeated a plurality of times to support a desirable amount of the functional material.

The method for producing the reactor according to an embodiment of this can further include, in addition to the above steps, a step of housing a plurality of honeycomb structures 10 in the cylindrical member 40.

The method for housing the plurality of honeycomb structures 10 in the cylindrical member 40 is not particularly limited, and any known method can be used. Such a method includes, but not limited to, fitting such as clearance fitting, interference fitting and shrinkage fitting, as well as brazing, welding, diffusion bonding, and the like.

### <Gas Recovery Device>

The gas recovery device according to an embodiment of the invention can be suitably used to adsorb and release the capturing target gas contained in the process gas.

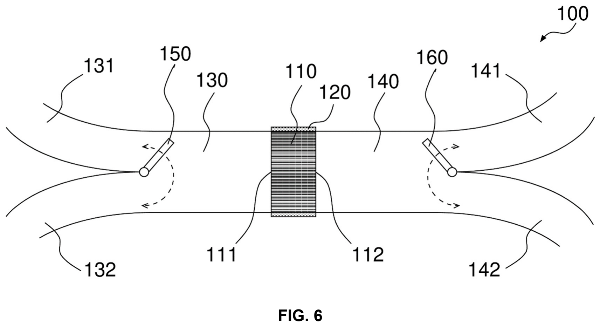

FIG. 6 is a schematic view of the gas recovery device according to an embodiment of the invention.

As shown in FIG. 6, a gas recovery device 100 includes: a reactor 110; a heater 120 configured to heat the reactor; a gas feed pipe 130 configured to feed the process gas or a purge gas to an inflow port 111 of the reactor 110; and a gas discharge pipe 140 configured to discharge the process gas or the purge gas from an outflow port 112 of the reactor 110. For the reactor 110, the above reactor is used, which allows the process gas containing the capturing target gas to easily flow into the cells 14 in the outer peripheral region, and which can increase the amount of the capturing target gas and extend the life of the reactor. Therefore, the gas recovery system 100 can maintain good gas recovery performance over a long period of time. When the above reactor supports the functional material 30, the amount of heating when releasing (desorbing) the capturing target gas can also be reduced, thus reducing the operating cost of the gas recovery system 100.

The gas feed pipe 130 has a gas feed branch pipe that branches into two parts. The gas feed branch pipe can be a first gas feed branch pipe 131 configured to feed the process gas and a second gas feed branch pipe 132 configured to feed the purge gas.

The gas discharge pipe 140 has a gas discharge branch pipe that branching into two parts. The gas discharge branch pipe can be a first gas discharge branch pipe 141 configured to discharge the process gas and a second gas discharge branch pipe 142 configured to discharge the purge gas.

The gas recovery device 100 can further include a feed gas switching valve 150 configured to shut off the first gas feed branch pipe 131 or the second gas feed branch pipe 132, and a discharge gas switching valve 160 configured to shut off the first gas discharge branch pipe 141 or the second gas discharge branch pipe 142.

In the gas recovery device 100 having the above structure, when recovering the capturing target gas contained in the process gas, the feed gas switching valve 150 is switched to shut off the second gas feed branch pipe 132 and open the first gas feed branch pipe 131, and the discharge gas switching valve 160 is switched to shut off the second gas discharge branch pipe 142 and open the first gas discharge branch pipe 141. The process gas containing the capturing target gas is then fed from the first gas feed branch pipe 131 to the inflow port 111 of the reactor 110 via the gas feed pipe 130. The process gas fed to the reactor 110 is discharged from the outflow port 112 after the capturing target gas is recovered. The discharged process gas is discharged from the first gas discharge branch pipe 141 via the gas discharge pipe 140.

Subsequently, when the capturing target gas that has been recovered in the reactor 110, the feed gas switching valve 150 is switched to open the second gas feed branch pipe 132 and shut off the first gas feed branch pipe 131, and the discharge gas switching valve 160 is switched to open the second gas discharge branch pipe 142 and shut off the first gas discharge branch pipe 141. The purge gas is then fed from the second gas feed branch pipe 132 to the inflow port 111 of the reactor 110 via the gas feed pipe 130. In this case, the reactor 110 is heated by the heater 120. The purge gas fed to the reactor 110 is discharged from the outflow port 112 together with the capturing target gas captured in the functional material 30 of the reactor 110. The purge gas containing the capturing target gas is discharged from the second gas discharge branch pipe 142 via the gas discharge pipe 140.

As used herein, the "purge gas" means a gas that can desorb the capturing target gas captured in the functional material 30 of the reactor 110 and discharge it from the reactor 110. The purge gas may be appropriately selected depending on the type of the capturing target gas. For example, when the capturing target gas is carbon dioxide, water vapor or the like may be used. The water vapor is preferably heated at 100°C or higher (e.g., 120°C) in the reactor 110 by heating with the heater 120.

### Description of Reference Numerals

10, 10a, 10b, 10c, 10d honeycomb structure
11 outer peripheral wall
12 inflow end face
13 outflow end face
14 cell
15 partition wall
15a, 15b, 15c, 15d side
16 protrusion
20 spacer
30 functional material
40 cylindrical member
100 gas recovery device
110 reactor
111 inflow port
112 outflow port
120 heater
130 gas feed pipe
131 first gas feed branch pipe
132 second gas feed branch pipe
140 gas discharge pipe
141 first gas discharge branch pipe
142 second gas discharge branch pipe
150 feed gas switching valve
160 discharge gas switching valve

## Claims

1. A reactor comprising a plurality of honeycomb structures each having an outer peripheral wall and partition walls provided on an inner side of the outer peripheral wall, the partition walls defining a plurality of cells through which a process gas containing a capturing target gas can flow, each of the cells extending from an inflow end face to an outflow end face of each honeycomb structure,
wherein the honeycomb structures are provided so that the outflow end faces and the inflow end faces of adjacent honeycomb structures face each other and central axes of the cells of the adjacent honeycomb structures are aligned with each other,
wherein the partition walls comprise at least one protrusion protruding into the cells and extending from the inflow end face to the outflow end face, and
wherein the protrusions on the partition walls of the adjacent honeycomb structures are provided at different positions.

2. The reactor according to claim 1, wherein the outflow end face and the inflow end face of the adjacent honeycomb structures are in contact with each other.

3. The reactor according to claim 1 or 2, wherein the honeycomb structures are further provided so that the outer peripheral walls parallel to an extending direction of the cells face each other.

4. The reactor according to claim 3, wherein the outer peripheral walls parallel to the extending direction of the cells are in contact with each other.

5. The reactor according to claim 1 or 2, wherein the protrusion is provided on the partition walls that defines the cells other than the cells located at the outermost periphery in a cross section of each of the honeycomb structures orthogonal to the extending direction of the cells.

6. The reactor according to claim 1 or 2, wherein each of the honeycomb structures has a rectangular pillar shape.

7. The reactor according to claim 1 or 2, wherein each of the cells has a quadrangular or hexagonal shape in a cross section of each of the honeycomb structures orthogonal to the extending direction of the cells.

8. The reactor according to claim 1 or 2, wherein the partition wall that defines one of the cells has a structure in which sides having the protrusion and sides having no protrusion are alternately continuous, in a cross section of each of the honeycomb structures orthogonal to the extending direction of the cells.

9. The reactor according to claim 1 or 2, wherein a width of the protrusion is 20 to 80% of a length of one side provided with the protrusion, in a cross section of each of the honeycomb structures orthogonal to the extending direction of the cells.

10. The reactor according to claim 1 or 2, wherein a height of the protrusion is 10 to 40% of a length of one side provided with the protrusion, in a cross section of each of the honeycomb structures orthogonal to the extending direction of the cells.

11. The reactor according to claim 1 or 2, wherein one of the honeycomb structures has a length of 10 to 200 mm in the extending direction of the cells.

12. The reactor according to claim 1 or 2, wherein the honeycomb structures comprise at least one selected from cordierite, mullite, alumina, silicon carbide, and Si-bonded silicon carbide as a main component.

13. The reactor according to claim 1 or 2, wherein the partition walls have a thickness of 0.05 to 5 mm.

14. The reactor according to claim 1 or 2, wherein the partition walls have a porosity of 30% or more and less than 80%.

15. The reactor according to claim 1 or 2, wherein the partition walls have an average pore diameter of 10 to 300 µm.

16. The reactor according to claim 1 or 2, further comprising a functional material supported on the partition walls.

17. The reactor according to claim 16, wherein the functional material is an amine compound and/or a metal organic framework.

18. The reactor according to claim 1 or 2, further comprising a cylindrical member that houses the honeycomb structures.

19. A gas recovery device for adsorbing and releasing a capturing target gas contained in a process gas, the gas recovery device comprising:
the reactor according to claim 1 or 2;
a heater configured to heat the reactor;
a gas feed pipe configured to feed the process gas or a purge gas to an inflow port of the reactor; and
a gas discharge pipe configured to discharge the process gas or the purge gas from an outflow port of the reactor.

20. The gas recovery device according to claim 19,
wherein the gas feed pipe has a gas feed branch pipe that branches into two portions, the gas feed branch pipe being a first gas feed branch pipe configured to feed the process gas and a second gas feed branch pipe configured to feed the purge gas,
wherein the gas discharge pipe has a gas discharge branch pipe that branches into two portions, the gas discharge branch pipe being a first gas discharge branch pipe configured to discharge the process gas and a second gas discharge branch pipe configured to discharge the purge gas, and
wherein the gas recovery device further comprises: a feed gas switching valve configured to shut off the first gas feed branch pipe or the second gas feed branch pipe; and a discharge gas switching valve configured to shut off the first gas discharge branch pipe or the second gas discharge branch pipe.
